# EUROPEAN PATENT SPECIFICATION

(11) **EP 2 684 908 B1**
(45) Date of publication and mention of the grant of the patent: **11.12.2019**
(21) Application number: 13153391.1
(22) Date of filing: 31.01.2013
(51) Int. Cl.: C08J 9/00, C08J 9/26, C08J 3/24

(54) **POROUS MATERIAL FOR INK STAMPS, PRODUCTION METHOD THEREFOR, AND SELF-INKING STAMP**
PORÖSES MATERIAL FÜR TINTENSTEMPEL, HERSTELLUNGSVERFAHREN DAFÜR UND SELBSTFÄRBENDER STEMPEL
MATÉRIAU POREUX POUR TAMPONS D'ENCRE, PROCÉDÉ DE PRODUCTION CORRESPONDANT ET TAMPON AUTO-ENCREUR

(30) Priority: 10.07.2012 JP 2012154874
(43) Date of publication of application: 15.01.2014
(73) Proprietor: Shachihata Inc., Nishi-ku, Nagoya-shi Aichi (JP)
(72) Inventor: Matsushita, Ikuzo, Uda-shi, Nara (JP); Nagata, Yoshiaki, Osaka-shi, Osaka (JP)
(74) Representative: Gill Jennings & Every LLP

(56) References cited:
- EP-A1- 1 642 930
- EP-A2- 0 191 327
- EP-B1- 1 534 772
- US-A1- 2008 161 438
- US-A1- 2010 099 784
- DATABASE WPI Week 200277 Thomson Scientific, London, GB; AN 2002-710806 -& JP 2002 265659 A (MITSUBISHI PENCIL CO LTD) 18 September 2002 (2002-09-18)

## Description

### TECHNICAL FIELD

The present invention relates to a porous material for use in an ink stamp of a type which internally storing stamping ink, so-called "self-inking stamp", and more particularly to a porous material for ink stamps (hereinafter referred to simply as "porous stamp material") having a continuous pore structure best suited to laser engraving.

### BACKGROUND ART

US2010/0099784A1 discloses a thermoplastic elastomer foaming material, particularly directed to use in footwear.

US2008/0161438A1 discloses a composition consisting of an ethylene polymer, a thermoplastic elastomer, a crosslinking agent and an optional foaming agent, particularly directed to use in footwear.

EP1534772B1 discloses thermoplastic elastomers having enhanced foaming and physical properties.

EP1642930A1 discloses a resin composition for foam, particularly directed to use in footwear.

EP0191327A2 discloses lightly crosslinked polyethylene polystyrene blend foams.

A porous stamp material having a continuous pore structure is disclosed, for example, in JP-B-S47-001173, JP-B-S47-039212 and JP-A-S51-074057. Meanwhile, there has been known as a technique for subjecting a porous stamp material to engraving using a laser engraving machine, as disclosed, for example, in JP-A-H10-337943, JP-A-2001-150780 and JP-A-2002-265659. Further, one example of a specific shape of an ink stamp with a stamping face obtained by engraving using a laser engraving machine is disclosed in JP-A-H06-234262.

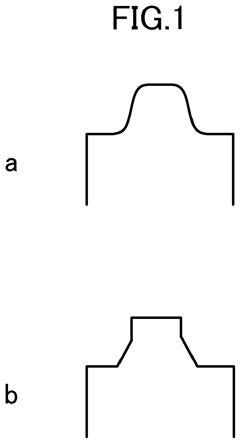

However, when a conventional porous stamp material is subjected to laser engraving, resin in a region thereof irradiated with a laser beam is burnt and vaporized, and simultaneously resin therearound is undesirably melted. Thus, a resulting ink stamp has a shape as illustrated in FIG. 1(a), i.e., it is difficult to obtain an ink stamp having a sharp edge.

As a result, an impression formed using a self-inking stamp obtained by allowing the ink stamp to internally store stamping ink is liable to have a vague outline and undergo blurring.

Moreover, the laser engraving is apt to cause excessive melting of thermoplastic resin, which leads to a problem that a resulting ink stamp causes a user to be overinked during stamping.

### SUMMARY OF THE INVENTION

### [TECHNICAL PROBLEM]

It is therefore an object of the present invention to provide a porous stamp material capable of allowing only resin in a region thereof irradiated with a laser beam during laser engraving in a production process of an ink stamp to be burnt and vaporized while preventing melting in any other unwanted region, thereby obtaining a sharp edge of the ink stamp and forming a clear impression. It is another object of the present invention to provide a porous stamp material having both heat resistance and solvent resistance, even though it comprises, as a primary component, a thermoplastic resin which would be generally less resistant to high temperature and organic solvent.

### [SOLUTION TO THE TECHNICAL PROBLEM]

According to a first aspect of the present invention, there is provided an ink stamp comprising a porous material, comprising: at least one thermoplastic resin selected from the group consisting of low-density polyethylene, linear low-density polyethylene, high-density polyethylene, ethylene-alpha-olefin copolymer, ethylene-vinyl acetate copolymer, and ethylene-acrylic copolymer; at least one thermoplastic elastomer selected from a plurality of different hydrogenated styrene based thermoplastic elastomers; and at least one filler selected from a plurality of different silicates , wherein the thermoplastic resin and/or the thermoplastic elastomer are cross-linked, and formed in a continuous pore structure.

Preferably, in the porous material of the present invention, the at least one thermoplastic resin is contained at a mixing ratio of 2 to 30 with respect to the at least one thermoplastic elastomer.

Preferably, in the porous material of the present invention, the at least one thermoplastic resin has a glass-transition temperature of 0°C or less.

Preferably, the porous material of the present invention has a type 0 durometer hardness (based on ASTM D 2240 Standard) of 75 or less.

According to a second aspect of the present invention, there is provided a method of producing a self-inking stamp comprising the above porous material. The method comprises: a preparation step of preparing a mixture which comprises: at least one thermoplastic resin selected from the group consisting of low-density polyethylene, linear low-density polyethylene, high-density polyethylene, ethylene-alpha-olefin copolymer, ethylene-vinyl acetate copolymer, and ethylene-acrylic copolymer; at least one thermoplastic elastomer selected from a plurality of different hydrogenated styrene based thermoplastic elastomers; and at least one filler selected from a plurality of different silicates; a mixing step of mixing the mixture obtained by the preparation step with at least one pore-forming agent selected from a plurality of different water-soluble compounds, at least one pore-formation aid selected from a plurality of different polyhydric alcohols, and at least one cross-linking agent selected from a plurality of different organic peroxides, to obtain a moldable material; a cross-linking/molding step of cross-linking the thermoplastic resin and/or the thermoplastic elastomer based on the cross-linking agent while heating the moldable material, to obtain a molded body; and an extraction step of extracting the pore-forming agent and the pore-formation aid from the molded body obtained by the cross-linking/molding step, to obtain a porous molded body having a continuous pore structure; and a further step of subjecting the above porous material to laser engraving to form an ink stamp, and then allowing the ink stamp to internally contain stamping ink.

### [EFFECT OF THE INVENTION]

The porous stamp material of the present invention can completely prevent melting of resin around a region irradiated with a laser beam during laser engraving, thereby obtaining an ink stamp having a sharp edge.

This makes it possible to provide an ink stamp capable of ensuring a sufficient ink storage amount as being impregnated with ink, and forming a clear impression without blurring and faintness. On the other hand, resin in the region irradiated with a laser beam is completely burnt and vaporized, so that it becomes possible to prevent a resulting ink stamp from becoming sticky, even if a engraving depth is set to a relatively large value, and eliminate a need for a cleaning process after the laser engraving, because no debris is generated as a result of the laser engraving.

In the porous stamp material of the present invention, no soot is produced during laser engraving. Thus, differently from a conventional similar type of stamp material having a need to clean an engraved surface after laser engraving, there is an advantage of being able to eliminate the need for the cleaning process, and a need for a suction device designed to remove such soot emitted to the atmosphere.

Further, no bad odor is produced during laser engraving. Thus, it becomes possible to eliminate a need for an odor absorber required under laws and regulations, such as the odor regulation, thereby significantly reducing an ink stamp production cost.

Furthermore, the present invention can provide a porous stamp material having both heat resistance and solvent resistance.

### BRIEF DESCRIPTION OF THE DRAWINGS

FIG. 1(a) is a schematic diagram illustrating a shape of a conventional ink stamp (comparative samples).
FIG. 1(b) is a schematic diagram illustrating a shape of an ink stamp prepared using a porous stamp material according to the present invention.
FIG. 2 is a photogram and a schematic diagram illustrating a hardness meter and a hardness measurement.

### DESCRIPTION OF EMBODIMENTS

A porous stamp material of the present invention will now be described in detail.

The porous stamp material of the present invention comprises a thermoplastic resin, a thermoplastic elastomer, and a filler, wherein the thermoplastic resin and/or the thermoplastic elastomer are cross-linked, and formed in a continuous pore structure.

The thermoplastic resin usable in the present invention is a material serving as a primary component of the porous stamp material of the present invention, and it is possible to select and use at least one of the group of ethylene-based resins consisting of low-density polyethylene (LDPE) (glass-transition temperature: about - 125°C), linear low-density polyethylene (LLDPE) (glass-transition temperature: about - 100°C), high-density polyethylene (HDPE) (glass-transition temperature: about - 120°C), ethylene-alpha-olefin copolymer (glass-transition temperature: about - 51°C), ethylene-vinyl acetate copolymer (EVA) (glass-transition temperature: about - 42°C), and ethylene-acrylic copolymer (glass-transition temperature: about - 80°C). Two or more of the above resins can be used in combination without any problem, and may be mixed at any mixing ratio. The above ethylene-based resins may be selectively used as optimal components to a porous stamp for self-inking stamps, because they are particularly low in glass-transition temperature and melting point among polyolefin resins, moderate in elasticity and excellent in compatibility with the aftermentioned thermoplastic elastomer. The ethylene-based resins promote complete burning, and therefore it is preferable to use a type of ethylene-based resin having a glass-transition temperature of 0°C or less.

The thermoplastic elastomer usable in the present invention is a material serving as an auxiliary component of the porous stamp material of the present invention, and a hydrogenated styrene based thermoplastic elastomer is used as the thermoplastic elastomer. Specifically, it is possible to select and use at least one of the group of thermoplastic elastomers obtained by hydrogenating a copolymer of styrene and conjugated diene, consisting of polystyrene-polybutadiene copolymer, polystyrene-polybutadiene diblock copolymer, polystyrene-polybutadiene triblock copolymer, polystyrene-vinyl polybutadiene triblock copolymer, polystyrene-polyisoprene copolymer, polystyrene-polyisoprene diblock copolymer (glass-transition temperature: about - 125°C), polystyrene-polyisoprene triblock copolymer, and polystyrene-vinyl polyisoprene triblock copolymer (glass-transition temperature: about - 32°C). Two or more of the above resins can be used in combination without any problem, and may be mixed at any mixing ratio. The above thermoplastic elastomers are optimal as an auxiliary material, because they are particularly low in glass-transition temperature and melting point, and excellent in compatibility with the aforementioned thermoplastic resin. The thermoplastic elastomers promote complete burning, and therefore it is preferable to use a type of thermoplastic elastomer having a glass-transition temperature of 0°C or less.

Preferably, the thermoplastic resin as the primary component and the thermoplastic elastomer as an auxiliary component are contained in such a manner that that the thermoplastic resin is mixed at a ratio of 2 to 30 with respect to the thermoplastic elastomer (i.e., the thermoplastic resin : the thermoplastic elastomer = ((2 to 30) : 1). If the thermoplastic elastomer is contained at a mixing ratio greater than the above ratio, melting of the porous stamp material of the present invention becomes excessive, which makes it impossible to obtain an ink stamp having a sharp edge contour. On the other hand, if the thermoplastic elastomer is contained at a mixing ratio less than the above ratio, a resulting porous stamp material becomes excessively hardened, which makes it impossible to obtain an adequate porous stamp material.

In the present invention, the filler is used as an essential component. The filler is a material for increasing strength of the porous stamp material of the present invention to provide enhanced processability during processing for an ink stamp, and it is possible to select and use at least one of the group of inorganic compounds, consisting of clay, talc, white mica (muscovite), wollastonite, serpentine, pyrolite, kaolinite, halloysite, sericite and montmorillonite. Two or more of the above fillers can be used in combination without any problem, and may be mixed at any mixing ratio.

In the present invention, in general, a silicate, such as clay, talc, white mica (muscovite), wollastonite, serpentine, pyrolite, kaolinite, halloysite, sericite or montmorillonite, is used to obtain the most desirable result. Although the reason is unclear, the porous stamp material using such a silicate exhibits optimal performance as a porous stamp material for self-inking stamps, in terms of a degree of sharpness in edge contour of an ink stamp to be obtained by laser caving, and a discharging state of stamping ink.

Although it would also be possible to use a filler other than a silicate, such as calcium carbonate, barium sulfate, titanium oxide, magnesium carbonate, dolomite or aluminum oxide, the same level of performance as that of the porous stamp material using a silicate cannot be obtained.

In the porous stamp material of the present invention, it is essentially required to cross-link the thermoplastic resin and/or the thermoplastic elastomer. Through cross-linking, the porous stamp material has thermosetting properties. Thus, it is believed that the porous stamp material becomes less likely to be easily melted at a normal melting point of polyethylene in combination with effects of the filler, and becomes more likely to be completely burnt at a temperature of laser engraving, thereby making it possible to obtain an ink stamp having a significantly sharp edge contour.

The cross-linking is performed using a cross-linking agent, particularly, using an organic peroxide. As an organic peroxide, it is possible to use dialkyl peroxide, peroxy ketal, hydroperoxide, peroxy ester, and dialkyl peroxide. However, considering heating at about 100°C during kneading, it is desirable to use an organic peroxide having a high decomposition temperature of 140 to 170°C.

Preferably, the porous stamp material of the present invention has a type 0 durometer hardness (based on ASTM D 2240 Standard) of 75 or less. This is because such a hardness value is best suited for a porous stamp material for self-inking stamps, in terms of ink holding performance and ink discharging performance.

In order to obtain the porous stamp material having such a hardness, it is preferable that the mixture of the thermoplastic resin and the thermoplastic elastomer, the filler, and the cross-linking agent, are contained in an aftermentioned cross-linked intermediate sheet, respectively, in an amount of 5 to 50 weight%, in an amount of 5 to 50 weight%, and in an amount of 0.1 to 5 weight%, wherein the porous stamp material has a structure in which a plurality of pores each having a pore size of 10 to 300 µm are communicated with each other, at a porosity of 30 to 80%.

A production method for the porous stamp material of the present invention will be described below.

As a production method for a porous stamp material formed in a continuous pore structure as in the present invention, there have been commonly known a foaming process, a sintering process and an elusion process.

Among them, the present invention employs the elusion process capable of uniformly distributing pores with a constant pore diameter and relatively easily performing design of communication passages between the pores, in view of producing uniform pores without a variation in pore diameter.

A pore-forming agent usable in the present invention may include a water-soluble compound such as salt or sugar, and is used in the form of a fine power. As the salt, it is desirable to employ a compound capable of being easily formed in a fine powder, and easily extracted by water after heating without being decomposed at a processing temperature of the thermoplastic resin (40 to 180°C). Specifically, it is preferable to use a metal salt such as sodium chloride, sodium sulfate or sodium nitrate. The salt may be used in the form of a fine powder having a particle size of 1 to 500 µm. As the salt, it is possible to use at least one selected from the group consisting of: monosaccharide such as pentose or hexose; disaccharide such as saccharose or maltose; polysaccharide such as starch or glycogen; and pentaerythritol. The sugar may be used in the form of a fine powder having a particle size of 1 to 500 µm. As the pore-forming agent, the salt and the sugar may be used independently or in combination, and may be appropriately selected according to intended purposes.

As a pore-formation aid usable in the present invention, it is possible to use polyhydric alcohol such as polyethylene glycol, polypropylene glycol, polyethylene glycol-polypropylene glycol copolymer, polyethylene glycol alkyl ether, polypropylene glycol alkyl ether, polyvinyl alcohol or glycerin. Specifically, it is desirable to use a combination of dihydric alcohol and trihydric alcohol.

The dihydric alcohol may include polyethylene glycol. Particularly, polyethylene glycol having an average molecular weight of 1,000 or more is easily handled. Polyethylene glycol functions as not only an extraction aid but also a dispersing agent for the pore-forming agent. The trihydric alcohol may include glycerin. While glycerin has an effect as an extraction aid, a major role thereof is to enhance tearing strength of a resulting porous stamp material. A porous stamp material extracted using only polyethylene glycol is apt to exhibit poor tearing strength or deterioration in dimensional stability due to swelling. Thus, it is desirable to use glycerin in combination. In this way, dihydric alcohol and trihydric alcohol may be used in combination in a balanced manner so as to obtain a molded material excellent in extractability, physical properties, and ink absorbability.

For producing the porous stamp material of the present invention, as a mixing step, the pore-forming agent and the pore-formation aid are input between into two rollers or into a kneader, and kneaded under heating. Then, the filler, the thermoplastic resin chips and the thermoplastic elastomer chips are added thereto, and a resulting mixture is further kneaded while being heated up to a temperature equal to or greater than of a melting point of a combination of the thermoplastic resin and the thermoplastic elastomer. Finally, the cross-linking agent is added thereto and a resulting mixture is further kneaded, under a temperature condition maintained at a value equal to or less than a decomposition temperature of the cross-linking agent. In this manner, a masterbatch consisting of a mixture of the pore-forming agent, the pore-formation aid, the filler, the thermoplastic resin chips, the thermoplastic elastomer chips and the cross-linking agent is obtained.

Then, the masterbatch is stretched into a sheet shape by a calender roll machine, to prepare an intermediate sheet.

Then, as a cross-linking/molding step, the intermediate sheet is heated at a temperature equal to or greater than the decomposition temperature of the cross-linking agent, by a hot press machine or the like. As a result, a cross-linked intermediate sheet is obtained in which cross-linking has occurred in molecules of the thermoplastic resin, or molecules of the thermoplastic elastomer, or molecules of a part or an entirety of the thermoplastic resin and the thermoplastic elastomer. Alternatively, the cross-linked intermediate sheet may be prepared by extruding the masterbatch into a sheet shape under heating at a temperature equal to or greater than of the decomposition of the cross-linking agent, by a sheet extruding machine.

A temperature during the cross-linking and molding is set in the range of 120 to 170°C where each of the thermoplastic resin as a raw material (thermoplastic resin composition) and the pore-formation aid is melted or softened, and the cross-linking agent is decomposed to form a cross-linked product. A time period of the cross-linking and molding is set in the range of about 3 to 15 minutes, including a time required for preheating, air removal and degassing. If the cross-linking/molding temperature is greater than 180°C, a speed of a cross-linking reaction is excessively increased, so that it becomes difficult to obtain an adequate molded body, due to excessively rapid progress of the cross-linking reaction during the preheating. On the other hand, if the cross-linking/molding temperature is less than 100°C, the cross-linking reaction is not adequately induced, so that it becomes difficult to obtain an adequate molded body, due to occurrence, for example, of a situation where a part of the intermediate sheet is not released from a molding die. If the cross-linking/molding time period is excessively short, the cross-linking reaction is likely to be completely finished, which causes difficulty in obtaining an adequate molded body. On the other hand, an excessively long cross-linking/molding time period causes deterioration in productivity and increase in production cost.

Then, as an extraction step, the pore-forming agent and the pore-formation aid are extracted from the cross-linked intermediate sheet by use of an extracting solvent such as water, and a resulting molded body is subjected to dehydration and drying so as to obtain the porous stamp material having a continuous pore structure. The porous stamp material of the present invention is cross-linked, and thereby excellent in thermal stability. Thus, even if the extraction step is performed using hot water having a temperature of 70 to 100°C, the pores are not damaged or lost. In terms of an extraction time for the pore-forming agent, the cross-linked molded body formed in the present invention allows the extraction step to be completed within a time which is several times less than that in a non-cross-linked molded body having the same composition. Therefore, the time required for the extraction step can be shortened, which is advantageous, particularly, to a product requiring quick delivery.

The porous stamp material obtained by the above process has a porosity depending on an amount of the pore-forming agent mixed in the moldable material, and is formed in a homogeneous continuous pore structure. Further, the thermoplastic resin as the primary component is cross-linked, so that physical properties, such as heat resistance, abrasion resistance and tension strength, are enhanced as compared to the thermoplastic resin composition. This is advantageous, particularly, to a previously-unrealizable application requiring heat resistance and abrasion resistance.

In the above process, when the masterbatch is prepared, an additive or the like may be appropriately added according to need. For example, a lubricant such as polyallylamine, paraffin, wax, higher fatty acid, fluorochemical surfactant, silicone-based surfactant, or non-ionic surfactant, an amine-based anti-aging agent, and/or a softener such as vaseline or plasticizer, may be added at respective effective amounts.

In the present invention, it is possible to optionally add a colorant, such as carbon black, nigrosine, red iron oxide, ultramarine blue, titanium oxide or calcium carbonate. The colorant can be mixed to obtain a porous stamp material with brighter color.

A method of preparing a self-inking stamp using the porous stamp material of the present invention will be described below.

A non-stamping face portion of the porous stamp material is engraved at a depth of about 0.1 to 10 mm by use of a carbon dioxide laser engraver or a YAG laser engraver, to form an ink stamp having a stamping face as illustrated in FIG. 1(a). Then, the ink stamp is impregnated with stamping ink to obtain a self-inking stamp.

During laser engraving, it is considered that the filler acts as a laser beam absorbing substance to prevent burning/melting of an unwanted region in the porous stamp material, and promote formation of a sharp edge and an adequate engraving depth, thereby achieving excellent processing accuracy. In addition, based on the cross-linking, strength of the entire ink stamp can be enhanced to prevent inclination of a convex portion on the stamping surface.

### [EXAMPLES]

The present invention will be more specifically described based on examples. It should be understood that the present invention is not limited to the following examples.

### (EXAMPLE 1)

### ▪ Mixing Step

61 weight% of sodium chloride having a particle size of 5 to 60 µm was input, as a pore-forming agent, into a kneader and stirred while being heated up to 90°C.

Then, 4.4 weight% of solid polyethylene glycol (melting point: 62°C, decomposition temperature: 100°C) having a molecular weight of 10,000 and 3.5 weight% of solid glycerin were added, as pore-formation aids, to the sodium chloride, while maintaining the temperature of the sodium chloride at 90°C, and they were mixed together. Thus, the polyethylene glycol and the glycerin were melted into a liquid by heat of the sodium chloride, to form a mixed solution with the sodium chloride. Then, 12.3 weight% of clay as a filler was added to the solution, and a resulting mixture was further kneaded.

Then, 14.0 weight% of polyethylene chips (melting point: 80°C) as a thermoplastic resin, and 3.5 weight% of polystyrene-vinyl polyisoprene triblock copolymer (glass transition temperature: - 32°C) as a thermoplastic elastomer were added to the mixture, and a resulting mixture was kneaded while maintaining the temperature of the mixture at 90°C.

Finally, 0.9 weight% of dialky peroxide, organic peroxide serving as a cross-linking agent, was added to the above mixture, and a resulting mixture was further kneaded, while maintaining the temperature of the mixture at 90°C.

In this manner, a masterbatch consisting of a homogenous mixture of sodium chloride, polyethylene glycol, glycerin, clay, polyethylene, polystyrene-vinyl polyisoprene triblock copolymer and dialky peroxide was obtained.

Then, the masterbatch is stretched into a sheet shape by a calender roll, and air-cooled, to prepare an intermediate sheet.

### ▪ Cross-Linking/Molding Step

Subsequently, the intermediate sheet was set in a die assembly of a hot press machine, and heated at a temperature (100°C) equal to or greater than a decomposition temperature of dialky peroxide for 5 minutes, to obtain a cross-linked intermediate sheet in which each of the polyethylene and polystyrene-vinyl polyisoprene triblock copolymer is cross-linked.

In the cross-linked intermediate sheet, sodium chloride, polyethylene glycol, glycerin, clay, polyethylene, polystyrene-vinyl polyisoprene triblock copolymer and dialky peroxide were homogenously dispersed. Further, all of the components were cooled down to a temperature equal to or less than their melting points, and solidified to form a hard body free of deformation even when pressed by a finger.

### ▪ Extraction Step

Subsequently, the cross-linked intermediate sheet was cut into a desired size, and a resulting piece was immersed in a hot water having a temperature of 70°C and serving as an extracting solvent, for 3 hours, to fully extract the sodium chloride, the polyethylene glycol and the glycerin therefrom.

Then, a resulting piece was fried by a hot-air dryer for 2 hours. As a result, a sheet-shaped porous stamp material having a continuous pore with an average pore diameter of 30 µm and a porosity of 60%.

### ▪ Engraving Step

The porous stamp material was irradiated with a laser beam from a YAG laser engraver (processing conditions: output power = 5W; processing speed = 300 mm/sec), in such a manner that a stamping face portion (stamping-pattern holding portion) has a depth of 0.2 mm, and a shoulder area (stamping-face-portion supporting trapezoidal-shaped portion) has a maximum depth of 0.8 mm. As a result, only resin in a region irradiated with the laser beam was burnt and vaporized, whereas resin in a region subjected to no irradiation with the laser beam was not changed at all. Thus, a stamping surface having a significant sharp edge could be obtained. The engraved material was cut into a desired size to obtain an ink stamp. The ink stamp was impregnated with stamping oil-based dye ink comprising a primary component of propylene glycol monoalkyl ether (Shachihata TAT ink), to form a self-inking stamp internally storing the ink. The obtained self-inking stamp could ensure a sufficient ink storage amount, and form a clear impression without blurring and faintness for a long period of time, while being kept from swelling and collapse of the pores.

Tables 1(1) and 1(2) illustrate respective compositions of inventive samples and comparative samples. Each sample was produced under the same process as that in Example 1. However, for facilitating comparison with each corresponding inventive sample, a blending amount in each comparative sample is expressed by a ratio with respect to a total amount of composition of the corresponding inventive sample, instead of weight%.

The composition of Comparative Sample 1 was obtained by removing the thermoplastic elastomer and the cross-linking agent from the composition of Inventive Sample 1 and changing a type of filler from Inventive Sample 1.

The composition of Comparative Sample 2 was obtained by removing the thermoplastic elastomer and the cross-linking agent from the composition of Inventive Sample 2 and changing a type of filler from Inventive Sample 2.

The composition of Comparative Sample 3 was obtained by removing the thermoplastic elastomer and the cross-linking agent from the composition of Inventive Sample 3 and changing a type of filler from Inventive Sample 3.

The composition of Comparative Sample 4 was obtained by removing the thermoplastic elastomer and the cross-linking agent from the composition of Inventive Sample 4 and changing a type of filler from Inventive Sample 4.

The composition of Comparative Sample 5 was obtained by removing the thermoplastic elastomer and the cross-linking agent from the composition of Inventive Sample 5 and changing a type of filler from Inventive Sample 5.

The composition of Comparative Sample 6 was obtained by removing the thermoplastic elastomer and the cross-linking agent from the composition of Inventive Sample 6 and changing a type of filler from Inventive Sample 6.

**TABLE 1(1)**

| Inventive sample No. | 1 | 2 | 3 | 4 | 5 | 6 |
|---|---|---|---|---|---|---|
| ---Thermoplastic resin--- | | | | | | |
| Low-density polyethylene (LDPE) | 14.0 | | | | | |
| Linear low-density polyethylene (LLDPE) | | 10.3 | | | | |
| High-density polyethylene (HDPE) | | | 20.3 | | | |
| Ethylene-alpha-olefin copolymer | | | | 13.5 | | |
| Ethylene-vinyl acetate copolymer | | | | | 16.6 | |
| Ethylene-acrylic copolymer | | | | | | 20.4 |

| ---Thermoplastic elastomer--- | | | | | | |
|---|---|---|---|---|---|---|
| Polystyrene-polyisoprene triblock copolymer | | 5.2 | | 5.8 | | 2.3 |
| Polystyrene-vinyl polyisoprene triblock copolymer | 3.5 | | 2.0 | | 5.5 | |

| ---Filler--- | | | | | | |
|---|---|---|---|---|---|---|
| Clay | 12.3 | | 20.3 | | | 22.6 |
| Talc | | 15.5 | | | 11.1 | |
| Kaolinite | | | | 13.5 | | |
| Calcium carbonate | | | | | | |
| Barium sulfate | | | | | | |
| Aluminum oxide | | | | | | |

| ---Pore-forming agent--- | | | | | | |
|---|---|---|---|---|---|---|
| Sodium chloride | 61.4 | 38.8 | | | 27.7 | |
| Starch | | 25.8 | | | | |
| Pentaerythritol | | | 50.7 | 57.7 | 27.7 | 45.2 |

| ---Pore-formation aid--- | | | | | | |
|---|---|---|---|---|---|---|
| Polyethylene glycol | 4.4 | 2.6 | 4.1 | 5.8 | 6.9 | 6.8 |
| Glycerin | 3.5 | 1.3 | 2.0 | 2.9 | 4.2 | 2.3 |

| ---Cross-linking agent--- | | | | | | |
|---|---|---|---|---|---|---|
| Dialkyl peroxide | | 0.5 | | 1.0 | | 0.5 |
| Peroxy ketal | 0.9 | | 0.6 | | 0.3 | |
| TOTAL | 100.0 | 100.0 | 100.0 | 100.0 | 100.0 | 100.0 |

**TABLE 1(2)**

| Comparative sample No. | 1 | 2 | 3 | 4 | 5 | 6 |
|---|---|---|---|---|---|---|
| ---Thermoplastic resin--- | | | | | | |
| Low-density polyethylene (LDPE) | 14.0 | | | | | |
| Linear low-density polyethylene (LLDPE) | | 10.3 | | | | |
| High-density polyethylene (HDPE) | | | 20.3 | | | |
| Ethylene-alpha-olefin copolymer | | | | 13.5 | | |
| Ethylene-vinyl acetate copolymer | | | | | 16.6 | |
| Ethylene-acrylic copolymer | | | | | | 20.4 |

| ---Thermoplastic elastomer--- | | | | | | |
|---|---|---|---|---|---|---|
| Polystyrene-polyisoprene triblock copolymer | | | | | | |
| Polystyrene-vinyl polyisoprene triblock copolymer | | | | | | |

| ---Filler--- | | | | | | |
|---|---|---|---|---|---|---|
| Clay | | | | | | |
| Talc | | | | | | |
| Kaolinite | | | | | | |
| Calcium carbonate | 12.3 | | 20.3 | | | 22.6 |
| Barium sulfate | | 15.5 | | | 11.1 | |
| Aluminum oxide | | | | 13.5 | | |

| ---Pore-forming agent--- | | | | | | |
|---|---|---|---|---|---|---|
| Sodium chloride | 61.4 | 38.8 | | | 27.7 | |
| Starch | | 25.8 | | | | |
| Pentaerythritol | | | 50.7 | 57.7 | 27.7 | 45.2 |

| ---Pore-formation aid--- | | | | | | |
|---|---|---|---|---|---|---|
| Polyethylene glycol | 4.4 | 2.6 | 4.1 | 5.8 | 6.9 | 6.8 |
| Glycerin | 3.5 | 1.3 | 2.0 | 2.9 | 4.2 | 2.3 |

| ---Cross-linking agent--- | | | | | | |
|---|---|---|---|---|---|---|
| Dialkyl peroxide | | | | 1.0 | | 0.5 |
| Peroxy ketal | | | | | 0.3 | |
| TOTAL | 95.6 | 94.3 | 97.4 | 94.2 | 94.5 | 97.7 |

Tables 2(1) and 2(2) illustrate test results of the inventive and comparative samples.

**TABLE 2(1)**

| Test Results | | | | | | |
|---|---|---|---|---|---|---|
| Inventive sample No. | 1 | 2 | 3 | 4 | 5 | 6 |
| Hardness | 75 | 67 | 68 | 75 | 65 | 75 |
| Heat resistance | 0-1% | 0-1% | 0-1% | 0-1% | 0-1% | 0-1% |
| Laser engravability | ○ | ○ | ○ | ○ | ○ | ○ |
| Cushion ability | good | good | good | good | good | good |

**TABLE 2(2)**

| Test Results | | | | | | |
|---|---|---|---|---|---|---|
| Comparative sample No. | 1 | 2 | 3 | 4 | 5 | 6 |
| Hardness | 50 | 46 | 51 | 85 | 82 | 82 |
| Heat resistance | 5-8% | 5-8% | 5-8% | 0-2% | 0-2% | 0-2% |
| Laser engravability | × | × | × | Δ | Δ | Δ |
| Cushion ability | good | good | good | bad | bad | bad |

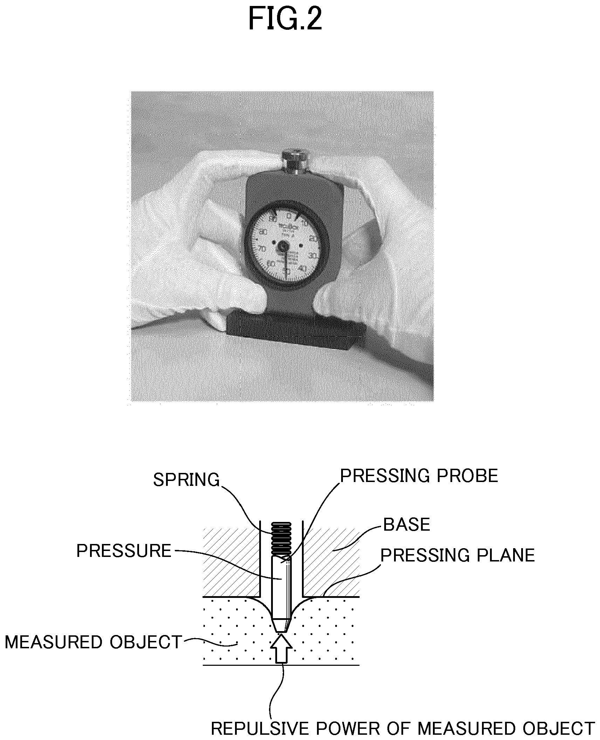

A hardness value of each sample was measured using a type 0 durometer (based on ASTM D 2240 Standard). FIG. 2 illustrates the durometer and a hardness measurement.

### (Heat Resistance Test)

In order to evaluate heat resistance of each sample, a porous stamp material having a size of 10 mm (length) × 10 mm (width) × 3 mm (thickness) was prepared based on each sample. The porous stamp material was immersed in boiling water (100°C) for 30 minutes, and dried to obtain a test piece. Then, a shrinkage ratio of each test piece was measured. A test piece having a large shrinkage ratio is evaluated as having low heat resistance, whereas a test piece having a low shrinkage ratio is evaluated as having high heat resistance, because it is assumed that if pores are destroyed by the boiling water, the test piece shrinks and becomes smaller.

### (Laser Engravability Test)

A porous stamp material prepared using each of the inventive and comparative samples was irradiated with a laser beam from a YAG laser engraver (processing conditions: output power = 5W; processing speed = 300 mm/sec), in such a manner that a stamping face portion (stamping-pattern holding portion) has a depth of 0.2 mm, and a shoulder area (stamping-face-portion supporting trapezoidal-shaped portion) has a maximum depth of 0.8 mm.

In Tables 2(1) and 2(2),
○: The stamping face portion had a sharp edge without any melting in a region subjected to no irradiation with the laser beam.
Δ: The stamping face portion had irregularities due to slight melting in the region subjected to no irradiation with the laser beam.
×: The stamping face portion had a droopy area due to serious melting in the region subjected to no irradiation with the laser beam.

The porous stamp material prepared using each of the inventive samples provided a stamping face portion as illustrated in FIG. 1(b), whereas the porous stamp material prepared using each of the comparative samples provided a stamping face portion as illustrated in FIG. 1(a).

### (Cushion Ability Test)

An ink stamp prepared by the above laser engraved porous stamp material was impregnated with stamping oil-based dye ink comprising a primary component of propylene glycol monoalkyl ether (Shachihata TAT ink), to form a self-inking stamp internally storing the ink. A cushion ability of the obtained self-inking stamp was evaluated by pressing it against an iron plate with no absorbability.

## Claims

1. An ink stamp comprising a porous material, the porous material comprising:
at least one thermoplastic resin selected from the group consisting of low-density polyethylene, linear low-density polyethylene, high-density polyethylene, ethylene-alpha-olefin copolymer, ethylene-vinyl acetate copolymer, and ethylene-acrylic copolymer;
at least one thermoplastic elastomer selected from a plurality of different hydrogenated styrene based thermoplastic elastomers; and
at least one filler selected from a plurality of different silicates,
wherein the thermoplastic resin and/or the thermoplastic elastomer are cross-linked, and formed in a continuous pore structure.

2. The ink stamp as defined in claim 1, wherein the at least one thermoplastic resin is contained at a mixing ratio of 2 to 30 with respect to the at least one thermoplastic elastomer.

3. The ink stamp as defined in claim 1, wherein the at least one thermoplastic resin has a glass-transition temperature of 0°C or less.

4. The ink stamp as defined in claim 1, which has a type 0 durometer hardness (based on ASTM D 2240 Standard) of 75 or less.

5. A method of producing a self-inking stamp comprising a porous material, the method comprising:
a preparation step of preparing a mixture which comprises: at least one thermoplastic resin selected from the group consisting of low-density polyethylene, linear low-density polyethylene, high-density polyethylene, ethylene-alpha-olefin copolymer, ethylene-vinyl acetate copolymer, and ethylene-acrylic copolymer; at least one thermoplastic elastomer selected from a plurality of different hydrogenated styrene based thermoplastic elastomers; and at least one filler selected from a plurality of different silicates;
a mixing step of mixing the mixture obtained by the preparation step with at least one pore-forming agent selected from a plurality of different water-soluble compounds, at least one pore-formation aid selected from a plurality of different polyhydric alcohols, and at least one cross-linking agent selected from a plurality of different organic peroxides, to obtain a moldable material;
a cross-linking/molding step of cross-linking the thermoplastic resin and/or the thermoplastic elastomer based on the cross-linking agent while heating the moldable material, to obtain a molded body; and
an extraction step of extracting the pore-forming agent and the pore-formation aid from the molded body obtained by the cross-linking/molding step, to obtain a porous molded body having a continuous pore structure; and
a further step of subjecting the porous molded body to laser engraving to form an ink stamp, and then allowing the ink stamp to internally contain stamping ink.

## Patentansprüche

1. Tintenstempel, umfassend ein poröses Material, wobei das poröse Material Folgendes umfasst:
mindestens ein thermoplastisches Harz, das aus der aus Polyethylen niedriger Dichte, linearem Polyethylen niedriger Dichte, Polyethylen hoher Dichte, Ethylen-Alphaolefin-Copolymer, Ethylen-Vinylacetat-Copolymer und Ethylen-Acryl-Copolymer bestehenden Gruppe ausgewählt ist;
mindestens ein thermoplastisches Elastomer, das aus einer Vielzahl verschiedener hydrierter thermoplastischer Elastomere auf Styrolbasis ausgewählt ist; und
mindestens einen Füllstoff, der aus einer Vielzahl verschiedener Silikate ausgewählt ist,
wobei das thermoplastische Harz und/oder das thermoplastische Elastomer vernetzt und mit einem Aufbau mit durchgängigen Poren ausgebildet sind.

2. Tintenstempel nach Anspruch 1, wobei das mindestens eine thermoplastische Harz in einem Mischungsverhältnis von 2 zu 30 in Bezug auf das mindestens eine thermoplastische Elastomer enthalten ist.

3. Tintenstempel nach Anspruch 1, wobei das mindestens eine thermoplastische Harz eine Glasübergangstemperatur von 0 °C oder weniger aufweist.

4. Tintenstempel nach Anspruch 1, der eine Härte (Durometer Typ 0 basierend auf der Norm ASTM D 2240) von 75 oder weniger aufweist.

5. Verfahren zum Herstellen eines ein poröses Material umfassenden selbstfärbenden Stempels, wobei das Verfahren Folgendes umfasst:
einen Zubereitungsschritt des Zubereitens eines Gemischs, das Folgendes umfasst: mindestens ein thermoplastisches Harz, das aus der aus Polyethylen niedriger Dichte, linearem Polyethylen niedriger Dichte, Polyethylen hoher Dichte, Ethylen-Alphaolefin-Copolymer, Ethylen-Vinylacetat-Copolymer und Ethylen-Acryl-Copolymer bestehenden Gruppe ausgewählt ist; mindestens ein thermoplastisches Elastomer, das aus einer Vielzahl verschiedener hydrierter thermoplastischer Elastomere auf Styrolbasis ausgewählt ist; und mindestens einen Füllstoff, der aus einer Vielzahl verschiedener Silikate ausgewählt ist;
einen Mischschritt des Mischens des mittels des Zubereitungsschritts erhaltenen Gemischs mit mindestens einem aus einer Vielzahl verschiedener wasserlöslicher Verbindungen ausgewählten Porosierungsmittel, mindestens einer aus einer Vielzahl verschiedener mehrwertiger Alkohole ausgewählten Porosierungsbeihilfe, und mindestens einem aus einer Vielzahl verschiedener organischer Peroxide ausgewählten Vernetzungsmittel, um ein formbares Material zu erhalten;
einen Vernetzungs-/Formschritt des Vernetzens des thermoplastischen Harzes und/oder des thermoplastischen Elastomers basierend auf dem Vernetzungsmittel während des Erwärmens des formbaren Materials, um einen geformten Körper zu erhalten; und
einen Extraktionsschritt des Extrahierens des Porosierungsmittels und der Porosierungsbeihilfe aus dem mittels des Vernetzungs-/Formschritts erhaltenen geformten Körpers, um einen porösen geformten Körper mit einem Aufbau mit durchgängigen Poren zu erhalten; und
einen weiteren Schritt des Einwirkens auf den porösen geformten Körper mit Lasergravur, um einen Tintenstempel zu bilden, und dann Ermöglichen, dass der Tintenstempel Stempeltinte intern enthält.

## Revendications

1. Tampon d'encre comprenant un matériau poreux, le matériau poreux comprenant :
une au moins résine thermoplastique sélectionnée dans le groupe consistant en un polyéthylène basse densité, un polyéthylène basse densité linéaire, un polyéthylène haute densité, un copolymère éthylène-alpha-oléfine, un copolymère éthylène-acétate de vinyle et un copolymère éthylène-acrylique ;
un au moins élastomère thermoplastique sélectionné parmi une pluralité de différents élastomères thermoplastiques à base d'un styrène hydrogéné ; et
une au moins matière de remplissage sélectionnée parmi une pluralité de différents silicates,
où la résine thermoplastique et/ou l'élastomère thermoplastique sont réticulés et formés en une structure à pores continue.

2. Tampon d'encre tel que défini à la revendication 1, où la une au moins résine thermoplastique est contenue à un rapport de mélange de 2 à 30 par rapport au un au moins élastomère thermoplastique.

3. Tampon d'encre tel que défini à la revendication 1, où la une au moins résine thermoplastique a une température de transition vitreuse inférieure ou égale à 0 °C.

4. Tampon d'encre tel que défini à la revendication 1, qui a une dureté, mesurée avec un duromètre de type 0 (sur la base de la norme ASTM D 2240) inférieure ou égale à 75.

5. Procédé de production d'un tampon auto-encreur comprenant un matériau poreux, le procédé comprenant :
une étape de préparation consistant à préparer un mélange qui comprend : une au moins résine thermoplastique sélectionnée dans le groupe consistant en un polyéthylène basse densité, un polyéthylène basse densité linéaire, un polyéthylène haute densité, un copolymère éthylène-alpha-oléfine, un copolymère éthylène-acétate de vinyle et un copolymère éthylène-acrylique ; un au moins élastomère thermoplastique sélectionné parmi une pluralité de différents élastomères thermoplastiques à base d'un styrène hydrogéné ; et une au moins matière de remplissage sélectionnée parmi une pluralité de différents silicates ;
une étape de mélange consistant à mélanger le mélange obtenu à l'étape de préparation avec un au moins agent de formation de pores sélectionné parmi une pluralité de différents composés hydrosolubles, un au moins facilitateur de la formation de pores sélectionné parmi une pluralité de différents alcools polyhydriques et un au moins agent de réticulation sélectionné parmi une pluralité de différents peroxydes organiques, pour obtenir un matériau moulable ;
une étape de réticulation/moulage consistant à réticuler la résine thermoplastique et/ou l'élastomère thermoplastique sur la base de l'agent de réticulation tout en chauffant le matériau moulable pour obtenir un corps moulé ; et
une étape d'extraction consistant à extraire l'agent de formation de pores et le facilitateur de la formation de pores du corps moulé obtenu à l'étape de réticulation/moulage pour obtenir un corps moulé poreux ayant une structure à pores continue ; et
une étape supplémentaire consistant à soumettre le corps moulé poreux à une gravure par laser pour former un tampon d'encre puis à permettre au tampon d'encre de contenir intérieurement une encre pour tampon.
